# EUROPÄISCHE PATENTSCHRIFT

(11) **EP 0 917 974 B1**
(45) Veröffentlichungstag und Bekanntmachung des Hinweises auf die Patenterteilung: **23.03.2005**
(21) Anmeldenummer: 98121430.7
(22) Anmeldetag: 11.11.1998
(51) Int. Cl.: B60H 1/00

(54) **Heizungs-, Belüftungs- und/oder Klimaanlage für Kraftfahrzeuge**
Heating, ventilating and/or air conditioning device for vehicle
Dispositif de chauffage, d'aération et/ou de climatisation pour véhicule automobile

(30) Priorität: 20.11.1997 DE 19751370
(43) Veröffentlichungstag der Anmeldung: 26.05.1999
(73) Patentinhaber: ADAM OPEL AG, 65423 Rüsselsheim (DE)
(72) Erfinder: Liepold, Werner, 65193 Wiesbaden (DE); Sünner, Tobias, Dr. rer.nat, 65428 Rüsselsheim (DE)
(74) Vertreter: Daniel, Ulrich W.P.

(56) Entgegenhaltungen:
- EP-A- 0 131 888
- US-A- 4 796 438
- US-A- 5 579 994

## Beschreibung

Die Erfindung bezieht sich auf eine Heizungs-, Belüftungs- und/oder Klimaanlage für Kraftfahrzeuge mit den im Oberbegriff des Patentanspruches 1 angegebenen Merkmalen.

Bekannte Anlagen dieser Art sind mit einer Innenraumtemperatur-Regelvorrichtung ausgestattet, die bewirken soll, daß die Fahrzeug-Innenraumtemperatur an vorgegebene Sollwerte angepaßt wird. Dies erfolgt durch eine Steuerung der Wärmemenge, die an die Luft übertragen wird, welche dem Innenraum zugeleitet wird, und durch Steuerung der Förderleistung eines Ventilators.

Wie in der DE-PS 37 31 435 beschrieben, gibt es für zu realisierende Aufheizkriterien bestimmte optimale Einstellungen von Wärmemenge und Luftdurchsatz. Wird beispielsweise eine schnellstmögliche Aufheizung gewünscht, wird ein Maximum an Heizleistung eingestellt, der optimale Luftdurchsatz entspricht jedoch nicht dem maximal möglichen Luftdurchsatz. Durch Computersimulation und Tests können Optimalwerte ermittelt werden. Nachteilig ist jedoch, daß die Optimalwerte von Fahrzeuginsassen als physiologisch unangenehm empfunden werden können. Zur Vermeidung der Insassenbeaufschlagung mit sehr kalter Luft ist in der DE-PS 37 31 435 vorgeschlagen, das Gebläse abzuschalten, wenn die Luftauslaßtemperatur einen Grenzwert unterschreitet.

Zur Verfeinerung der Physiologieanpassung sind sehr aufwendige Regelalgorithmen entwickelt worden. Wie in der DE-OS 43 33 411 angegeben, ist ein Komfortabilitätsindex ein Maß für das Insassenwohlbefinden. Der Index ist eine Funktion der Betriebsbedingungen (zumindest der Auslaßlufttemperatur und des Auslaßluftvolumens). In Abhängigkeit von einem vorgewählten Temperatur-Sollwert wird ein Komfortabilitätsindex-Sollwert ermittelt. Durch Steuerung von Luftauslaßtemperatur und -volumen wird dann versucht, den aktuellen Wunschbedingungen möglichst nahezukommen, also den Index an den Soll-Index anzunähern. Bei einer Vielzahl von Einflußfaktoren und bei begrenzter Heizleistung der modernen Heizungs-, Belüftungs- und/oder Klimaanlagen gelingt dies trotz des hohen Aufwandes nur teilweise.

In der DE-OS 196 10 148 ist zur Umgehung der genannten Schwierigkeiten vorgesehen, daß Insassen die einfache Möglichkeit der manuellen Verstellung der Luftmenge haben, wenn diese als physiologisch unangenehm empfunden wird. Damit vergleichbar ist auch eine Lösung nach DE-PS 196 36 210.

Die Tendenz der aktuellen Fahrzeugentwicklung ist eine immer bessere Auslastung des Energiegehaltes des Kraftstoffes bei Vermeidung von Energie-"Verlusten", welche bislang als Motorabwärme zur Fahrzeugaufheizung genutzt werden konnten. So kommt es bei Fahrzeugen mit modernen Antrieben immer häufiger vor, daß Heizleistungsmangel besteht. Selbst bei kurzzeitigem Stillstand an Ampeln oder Schranken kann die zur Verfügung stehende Heizleistung deutlich sinken, so daß der vorgegebene Sollwert nicht erreichbar ist. Mit diesen Mängelfällen einhergehend sind Betriebszustände der Heizungs-, Belüftungs- und/oder Klimaanlagen, die zwar im Hinblick auf das vorgegebene Kriterium optimal sein können, jedoch unkomfortabel sind.

Es ist Aufgabe der Erfindung, eine Heizungs-, Belüftungsund/oder Klimaanlage zu schaffen, die ohne hohen Aufwand unter allen Betriebsbedingungen ein hohes Komfortgefühl an die Fahrzeuginsassen vermittelt.

Zur Lösung dieser Aufgabe zeichnet sich die Heizungs-, Belüftungs- und/oder Klimaanlage gemäß der Erfindung durch die im Patentanspruch 1 angegebenen Merkmale aus. Einzelheiten der Erfindung ergeben sich aus den Patentansprüchen 2 bis 7.

Es werden Mittel zur Erkennung von Leistungsmangel der Heizungs-, Belüftungs- und/oder Klimaanlage vorgesehen. Bei erkanntem Leistungsmangel wird eine Regelvorrichtung der Anlage umgeschaltet auf eine Komfort-Betriebsart, in der nicht mehr der Betrieb der Anlage optimiert erfolgt, sondern in der ein Komfort-Empfinden der Insassen die oberste Priorität hat. Es kann beispielsweise trotz geringer zur Verfügung stehender Wärmemenge zur Anpassung der Innenraumtemperatur an die Solltemperatur eine relativ hohe Lüfterdrehzahl optimal sein. Die Einstellung eines hohen Luftvolumens wäre aber unkomfortabel, da die Beaufschlagung der Insassen mit viel kalter Luft als unangenehm empfunden wird. Bei Leistungsmangel wird dies in der Komfort-Betriebsart beachtet und ein Fördervolumen eingestellt, das geringer ist, als das optimal einzustellende Volumen.

Sind die Leistungsmangelbedingungen nicht mehr gegeben, wird die Regelvorrichtung der Heizungs-, Belüftungs- und/oder Klimaanlage wieder in die Standard-Betriebsart zurückgeschaltet, in der dann der optimierte Betrieb erfolgt.

Leistungsmangel kann auf einfache Weise automatisch immer dann erkannt werden, wenn an der Heizungs-, Belüftungsund/oder Klimaanlage die maximale Heizleistung gefordert wird. Hier kann davon ausgegangen werden, daß dann die zur Erreichung oder Aufrechterhaltung der vorgegebenen Soll-Innenraumtemperatur notwendige Heizleistung nicht zur Verfügung steht. Damit ist die von der Regelung geforderte Auslaßlufttemperatur nicht erreichbar. Befinden sich also Lufttemperatur-Steuerelemente (Luftmischklappe und/oder Wärmetauscherventil) in Maximalstellungen, kann von Heizleistungsmangel ausgegangen werden, was mit sehr einfachen Mitteln erkennbar ist. Meist weisen Anlagen der genannten Art bereits Mittel zur Positionserfassung dieser Steuerelemente auf.

Die Komfort-Betriebsart wird auf Basis von zumindest einer Kennlinie gesteuert, die in einem elektronischen Speicher abgelegt ist. Sie wird fahrzeugtyp- und/oder -ausstattungsspezifisch experimentell ermittelt und derart festgelegt, daß sie dem Komfortempfinden eines möglichst breiten Kundenkreises entspricht. Die Kennlinie enthält Luftvolumenwerte, die bestimmten Wärmetauscher-Temperaturen und/oder Auslaßtemperaturen (Temperatur im Bereich eines Luftauslasses) zugeordnet sind und die nicht den optimalen, sondern komfortablen Luftvolumen-Einstellwerten entsprechen.

Details der Erfindung werden anhand eines Ausführungsbeispiels erläutert. Von den zugehörigen Zeichnungen zeigt
- Fig. 1:: eine Heizungs-, Belüftungs- und/oder Klimaanlage in schematischer Darstellungsweise,
- Fig. 2:: ein Blockdiagramm zur Verdeutlichung der Arbeitsweise der Anlage nach Figur 1,
- Fig. 3:: eine Kennlinie für den Betrieb der Anlage nach Figur 1 in der Komfort-Betriebsart.

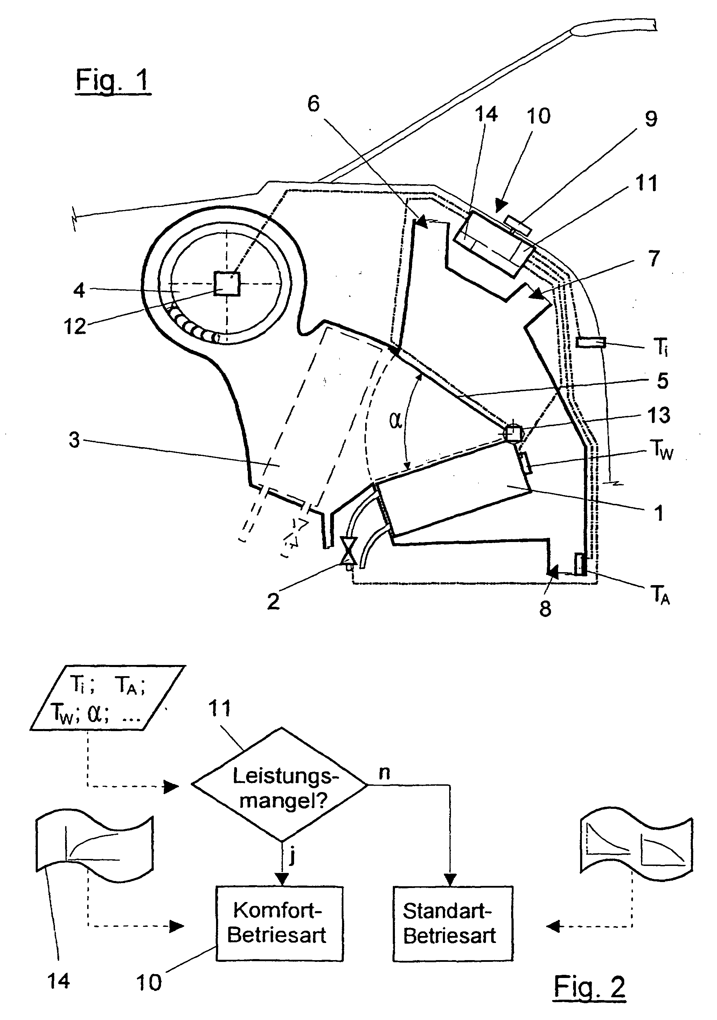

Eine in Figur 1 gezeigte Heizungs-, Belüftungs- und/oder Klimaanlage ist, wie bekannt, mit einem Wärmetauscher 1 ausgestattet, der von Motorkühlwasser durchflossen ist und ein Ventil 2 aufweisen kann. Die Anlage ist, wenn sie als Klimaanlage ausgeführt ist, mit einem Verdampfer 3 ausgerüstet. Ein Ventilator 4, der in der Drehzahl steuerbar ist, fördert Luft in Richtung Wärmetauscher 1. Vor dem Wärmetauscher 1 ist eine Luftmischklappe 5 angeordnet, die um eine Achse verschwenkbar ist. Je nach eingestelltem Schwenkwinkel α wird mehr oder weniger Luft über den Wärmetauscher 1 geleitet. Diese Luft wird sich hinter dem Wärmetauscher 1 mit der kalten (am Wärmetauscher 1 vorbeigeführten) Luft vermischen, wobei die Mischluft zu verschiedenen Luftauslässen 6, 7, 8 geleitet wird. In anderer Ausführung der Erfindung kann die Temperatur der dem Innenraum zuzuführenden Luft ausschließlich über ein Wärmetauscherventil gesteuert werden, wobei dann die gesamte Luft über den Wärmetauscher geleitet wird.

Zu einer Innenraumtemperatur-Regelvorrichtung der Anlage gehören:
- eine Einheit 9 zur Sollwertvorgabe (Wunsch-Innenraumtemperatur) durch Fahrzeuginsassen,
- eine Steuereinheit 10 zur Verstellung der Luftmischklappe 5 , zur Verstellung des Ventils 2 (soweit vorhanden) und zur Einstellung der Förderleistung V_{Gebl} des Ventilators 4,
- eine Vergleichseinrichtung 11 zur Erkennung von Heizleistungsmangel,
- eine Stelleinheit 12 in Verbindung mit einem Ventilatorantrieb,
- eine Stelleinheit 13 in Verbindung mit einem Schwenkantrieb der Mischklappe 5,
- ein elektronischer Speicher 14 für Kennlinien der Komfort-Betriebsart,
- Temperatursensoren Tᵢ für das Erfassen der Innenraumtemperatur, T_{A} für das Erfassen der Temperatur im Bereich eines Fußraumluftauslasses 8 und optional T_{W} für das Erfassen einer Wärmetauschertemperatur.

Die Steuereinheit 10, die Einheit 9 zur Sollwertvorgabe, die Vergleichseinrichtung 11 sowie der Speicher 14 für die Komfort-Kennlinie (auch der Speicher für die Kennwerte der Standard-Betriebsart) können eine Baueinheit bilden.

Die Steuerung der Heizungs-, Belüftungs- und/oder Klimaanlage erfolgt in einer Standard-Betriebsart in bekannter Weise. Die Innenraumtemperatur wird durch Verstellen der Mischklappe 5 und der Ventilatorförderleistung V_{Gebl} an vorgegebene Solltemperaturen angenähert. Durch die genannten Verstellungen wird letztendlich die Auslaßtemperatur T_{A} und die Wärmetauschertemperatur T_{W} wunschgemäß beeinflußt. Für die jeweiligen Parameter werden Optimalwerte eingestellt, die fahrzeugspezifisch so ermittelt wurden, daß ein möglichst schnelles Angleichen und Einhalten der Sollwerte möglich ist.

Bei Auftreten von Heizleistungsmangel wird die Innenraumtemperatur-Regeleinrichtung umgeschaltet in eine Komfort-Betriebsart, so daß vermieden wird, daß Insassen die Wirkung der Heizungs-, Belüftungs- und/oder Klimaanlage als unangenehm empfinden. Dabei wird hingenommen, daß der Betrieb der Anlage nicht mehr eine optimierte Annäherung an die Sollwerte zur Folge hat, so daß also der Komfort höchste Priorität erhält.

Heizleistungsmangel wird von der Vergleichseinrichtung 11 durch Auswertung von verschiedenen Signalen erkannt: Ist die Anlage auf maximalen Heizbetrieb eingestellt (Mischluftklappenwinkel α hat einen maximalen Wert, das Wärmetauscherventil 2 ist maximal offen), kann von Heizleistungsmangel ausgegangen werden. Dies hat die Umschaltung in die Komfort-Betriebsart zur Folge. Zusätzlich kann überprüft werden, ob die Auslaßtemperatur T_{A} oder die Wärmetauschertemperatur T_{w} einen bestimmten Sollwert unterschreiten, womit auch der Grenzfall - maximaler Heizbetrieb ohne Bestehen von Heizleistungsmangel - zu erfassen ist. Der Betrieb des Verdampfers 3 kann als weiteres Kriterium zur Bestimmung von Heizleistungsmangel herangezogen werden. Ist der Verdampfer 3 bei den vorgenannten Bedingungen außer Betrieb, besteht Heizleistungsmangel. Dieser Mangel kann aber auch bei in Betrieb befindlichem Verdampfer 3 bestehen, wenn Lufttrockung beim Heizbetrieb gewünscht ist. Somit ist die Einbeziehung des Verdampferbetriebszustandes bei der Feststellung von Heizleistungsmangel also optional.

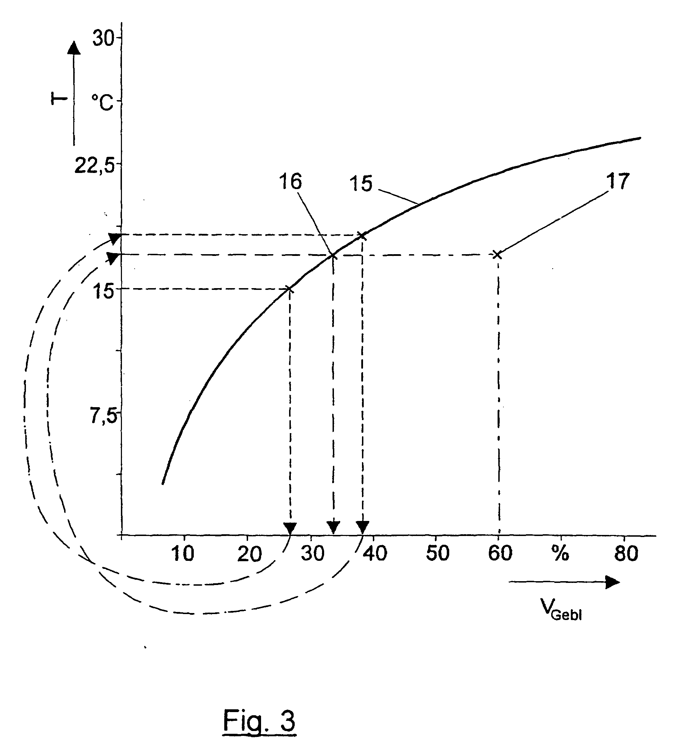

In der Komfort-Betriebsart greift die Steuereinheit 10 auf Kennwerte zurück, die in dem Speicher 14 abgelegt sind. Eine Kennlinie 15, die beispielhaft komfortable Werte für die Temperatur und zugehörige Luftdurchsätze zeigt, ist in Figur 3 verdeutlicht. Der Luftdurchsatz V_{Gebl} wird abhängig von der gemessenen Temperatur (T_{A} oder T_{W}) eingestellt. Im Beispiel wird bei Heizleistungsmangel eine Temperatur T=15°C erfaßt und daraufhin das Gebläse auf ca. 26prozentige Leistung eingestellt, so daß Insassen nur geringfügig mit relativ kalter Luft beaufschlagt werden. Aufgrund der geringen Luftförderleistung steigt die Temperatur T auf einen Wert von etwa 18°C an, womit das Gebläse auf ca. 38% Förderleistung eingestellt werden kann. Dies wiederum hat ein Abfallen der Temperatur auf etwa 17°C zur Folge, so daß die Gebläseleistung dann auf etwa 34% verstellt wird. Die Gebläseleistung V_{Gebl} pegelt sich also temperaturabhängig entlang der Komfortkennlinie 15 auf einen Komfortpunkt 16 ein. Dieser Wert entspricht bei Heizleistungsmangel nicht dem Optimum für eine schnelle Erwärmung, welches beispielsweise bei 60% Gebläseleistung liegen könnte (Optimalpunkt 17). Eine Beaufschlagung der Insassen mit 60prozentiger Gebläseleistung bei 17°C Lufttemperatur wäre aber unkomfortabel, wobei dieser Punkt 17 bei einer herkömmlichen Regelung im Beispielfall nicht aufrechtzuerhalten wäre. Die Temperatur T_{A} bzw. T_{W} würde bei 60%iger Gebläseleistung weiter fallen. Im Beispiel sind keine stationären, sondern ausschließlich momentane Betriebspunkte innerhalb des Regelungsprozesses gezeigt.

Bestehen die Bedingungen des Heizleistungsmangels nicht mehr, wird in die Standard-Betriebsart zurückgeschaltet.

## Patentansprüche

1. Heizungs-, Belüftungs- und/oder Klimaanlage für Kraftfahrzeuge mit einer Innenraumtemperatur-Regelvorrichtung zur automatischen Regelung der dem Innenraum zuzuführenden Wärmemenge durch Regelung der Auslaßlufttemperatur (T_{A}) und der Förderleistung (V_{Gebl}) zumindest eines Ventilators (4) und zur Physiologie-Anpassung von Auslaßlufttemperatur (T_{A}) und Förderleistung (V_{Gebl}) Zwecks Vermittlung eines Komfortgefühls, **gekennzeichnet durch** Mittel zur Erkennung von Heizleistungsmangel der Anlage, der dann besteht, wenn vorgegebene Sollwerte der Auslaßlufttemperatur (T_{A}) mit der zur Verfügung stehenden Heizleistung nicht erreichbar sind und **durch** Mittel, die die Regelvorrichtung umschalten in eine Komfort-Betriebsart, dann wenn Heizleistungsmangel besteht und die die Regelvorrichtung zurückschalten in eine Standard-Betriebsart, dann wenn kein Heizleistungsmangel besteht, wobei in der Komfort-Betreibsart das Komfort-Empfinden eines Fahrzeuginsassen oberste Priorität hat, während in der Standard-Betreibsart der Betreib der Auflage optimiert erfolgt.

2. Heizungs-, Belüftungs- und/oder Klimaanlage für Kraftfahrzeuge nach Anspruch 1, **gekennzeichnet durch** einen elektronischen Speicher (14), der zumindest eine experimentell ermittelte, fahrzeugspezifische Kennlinie (15), auf deren Basis die Förderleistung (V_{Gebl}) des Ventilators (4) in der Komfort-Betriebsart der Anlage geregelt wird, enthält.

3. Heizungs-, Belüftungs- und/oder Klimaanlage für Kraftfahrzeuge nach Anspruch 1 oder 2, **dadurch gekennzeichnet, daß** die Mittel zur Erkennung von Heizleistungsmangel der Anlage elektrisch verbunden sind mit einer Steuereinheit (10) zur Steuerung zumindest einer Luftmischklappe (5) und/oder zur Steuerung eines Wärmetauscherventils (2) und Heizleistungsmangel C : <> A:< > dann erkennen, wenn sich die Luftmischklappe (5) und/oder das Ventil (2) in einer Maximalstellung befinden.

4. Heizungs-, Belüftungs- und/oder Klimaanlage nach Anspruch 3, **dadurch gekennzeichnet, daß** Heizleistungsmangel dann erkannt wird, wenn die gesamte dem Innenraum zuzuführende Luft über einen unter den momentanen Bedingungen maximal mit Heizleistung beaufschlagten Wärmetauscher (1) geleitet wird und kein Anteil dieser Luft von einem Verdampfer (3) einer Klimaanlage abgekühlt wird.

5. Heizungs-, Belüftungs- und/oder Klimaanlage nach Anspruch 3 oder 4, **gekennzeichnet durch** einen Sensor, der die Temperatur (T_{A}) der dem Fahrzeuginnenraum zuzuführenden Luft im Bereich zumindest eines Luftauslasses (8) in an sich bekannter Weise erfaßt und **durch** eine Vergleichseinrichtung (11), die Heizleistungsmangel erst dann erkennt, wenn diese Temperatur (T_{A}) unterhalb eines Kennwertes liegt.

6. Heizungs-, Belüftungs- und/oder Klimaanlage für Kraftfahrzeuge nach Anspruch 3 oder 4, **gekennzeichnet durch** einen Sensor, der die Temperatur (T_{W}) des Wärmetauschers (1) in an sich bekannter Weise erfaßt und **durch** eine Vergleichseinrichtung (11), die Heizleistungsmangel erst dann erkennt, wenn diese Temperatur (T_{W}) unterhalb eines Kennwertes liegt.

7. Heizungs-, Belüftungs- und/oder Klimaanlage nach Anspruch 5 oder 6, **dadurch gekennzeichnet, daß** die sensorisch erfaßte Auslaßtemperatur (T_{A}) bzw. Wärmetauschertemperatur (T_{W}) als Regelbasis für die Steuerung der Förderleistung (V_{Gebl}) des Ventilators (4) in der Komfort-Betriebsart genutzt wird.

## Claims

1. Heating, ventilation and/or air conditioning system for motor vehicles with an interior temperature regulating device for automatic regulation of the quantity of heat to be delivered to the interior by regulation of the outlet air temperature (Tₒᵤₜ) and of the flow rate (V_{fan}) of at least one fan (4) and for adaptation of outlet air temperature (Tout) and flow rate (V_{fan}) to physiology for the purpose of conveying a feeling of comfort, **characterised by** means for detecting a lack of heating capacity of the system, which exists when given nominal values of outlet air temperature (Tₒᵤₜ) cannot be attained with the heating capacity available, and by means which switch the regulating device to a comfort mode when there is a lack of heating capacity and which switch the regulating device back to a standard mode when there is no lack of heating capacity, wherein in the comfort mode the sense of comfort of a vehicle passenger has the highest priority, while in the standard mode operation of the system is optimised.

2. Heating, ventilation and/or air conditioning system for motor vehicles according to claim 1, **characterised by** an electronic memory (14) which contains at least one experimentally determined, vehicle-specific characteristic curve (15) on the basis of which the flow rate (V_{fan}) of the fan (4) is regulated in the comfort mode of the system.

3. Heating, ventilation and/or air conditioning system for motor vehicles according to claim 1 or 2, **characterised in that** the means for detecting a lack of heating capacity of the system are electrically connected to a control unit (10) for the control of at least one air mixing valve (5) and/or for the control of a heat exchanger valve (2), and detect a lack of heating capacity when the air mixing valve (5) and/or the valve (2) is in a maximum position.

4. Heating, ventilation and/or air conditioning system according to claim 3, **characterised in that** a lack of heating capacity is detected when all the air to be delivered to the interior is conducted over a heat exchanger (1) which is subjected to maximum heating capacity under the instantaneous conditions and no portion of this air is cooled by an evaporator (3) of an air conditioning system.

5. Heating, ventilation and/or air conditioning system according to claim 3 or 4, **characterised by** a sensor which in a manner known in the art detects the temperature (Tₒᵤₜ) of the air to be delivered to the vehicle interior in the region of at least one air outlet (8) and by a comparator (11) which detects a lack of heating capacity only when this temperature (Tₒᵤₜ) is below a characteristic value.

6. Heating, ventilation and/or air conditioning system for motor vehicles according to claim 3 or 4, **characterised by** a sensor which in a manner known in the art detects the temperature (Tₕ) of the heat exchanger (1) and by a comparator (11) which detects a lack of heating capacity only when this temperature (Tₕ) is below a characteristic value.

7. Heating, ventilation and/or air conditioning system according to claim 5 or 6, **characterised in that** the sensor-detected outlet temperature (Tₒᵤₜ) or heat exchanger temperature (Tₕ) is used as a regulating basis for control of the flow rate (V_{fan}) of the fan (4) in the comfort mode.

## Revendications

1. Dispositif de chauffage, d'aération et/ou de climatisation pour véhicule automobile, ayant un organe de réglage de la température de l'habitacle, pour le réglage automatique de la quantité de chaleur devant alimenter l'habitacle, grâce à un réglage de la température de sortie d'air (T_{A}) et de la puissance de soufflage (V_{Souffl}) d'au moins un ventilateur (4) et pour l'adaptation physiologique de la température de sortie d'air (T_{A}) et de la puissance de soufflage (V_{Souffl}) en vue d'obtenir une sensation de confort, **caractérisée par** des moyens de reconnaissance d'insuffisance de puissance calorifique du dispositif qui survient lorsque des valeurs de consigne prédéterminées de la température de sortie d'air (T_{A}) ne peuvent pas être atteintes avec la puissance calorifique disponible, et par des moyens, qui font ensuite passer l'organe de réglage en mode de fonctionnement de confort en présence d'une insuffisance de puissance calorifique, et qui font ensuite commuter de nouveau l'organe de réglage en mode de fonctionnement standard, lorsqu'il n'y a pas d'insuffisance de puissance calorifique, la sensation de confort d'un occupant du véhicule ayant dans le mode de fonctionnement de confort la priorité la plus élevée, alors qu'en mode de fonctionnement standard, le fonctionnement du dispositif s'effectue de façon optimisée.

2. Dispositif de chauffage, d'aération et/ou de climatisation pour véhicule automobile selon la revendication 1, **caractérisé par** une mémoire électronique (14), qui contient au moins une courbe caractéristique (15) obtenue expérimentalement et spécifique au véhicule, sur la base de laquelle la puissance de soufflage (V_{Souffl}) du ventilateur (4) est réglée en mode de fonctionnement de confort du dispositif.

3. Dispositif de chauffage, d'aération et/ou de climatisation pour véhicule automobile selon la revendication 1 ou 2, **caractérisé en ce que** les moyens de reconnaissance de l'insuffisance de puissance calorifique du dispositif sont reliés électriquement à une unité de commande (10) pour la commande d'au moins un clapet mélangeur d'air (5) et/ou pour la commande d'une valve (2) d'échangeur de chaleur et reconnaissent alors l'insuffisance de puissance calorifique, lorsque le clapet mélangeur d'air (5) et/ou la valve (2) se trouvent en position maximale.

4. Dispositif de chauffage, d'aération et/ou de climatisation selon la revendication 3, **caractérisé en ce que** l'insuffisance de puissance calorifique est alors reconnue, lorsque l'air devant alimenter l'ensemble de l'habitacle est amené au moyen d'un échangeur de chaleur (1) actionné au maximum avec une puissance calorifique se situant en dessous des conditions instantanées, et lorsque aucune partie de cet air n'est refroidie par un évaporateur (3) d'une installation de climatisation.

5. Dispositif de chauffage, d'aération et/ou de climatisation selon la revendication 3 ou 4, **caractérisé par** un capteur qui mesure de façon connue la température (T_{A}) de l'air alimentant l'habitacle du véhicule dans la zone d'au moins une sortie d'air (8), et par un organe de comparaison (11) qui ne reconnaît alors l'insuffisance de puissance calorifique que lorsque cette température (T_{A}) est inférieure à une valeur caractéristique.

6. Dispositif de chauffage, d'aération et/ou de climatisation selon la revendication 3 ou 4, **caractérisé par** un capteur qui mesure de façon connue la température (T_{W}) de l'échangeur ; de chaleur (1), et par un organe de comparaison (11) qui ne reconnaît l'insuffisance de puissance calorifique que lorsque cette température (T_{w}) est inférieure à une valeur caractéristique.

7. Dispositif de chauffage, d'aération et/ou de climatisation selon la revendication 5 ou 6, **caractérisé en ce que** la température de sortie (T_{A}) ou la température de l'échangeur de chaleur (T_{W}) mesurée par le capteur est utilisée comme base de réglage pour la commande de la puissance de soufflage (V_{Souffl}) du ventilateur (4) en mode de fonctionnement de confort.
